# EUROPEAN PATENT APPLICATION

(11) **EP 3 467 060 A1**
(43) Date of publication of application: **10.04.2019**
(21) Application number: 17802694.4
(22) Date of filing: 19.05.2017
(51) Int. Cl.: C09D 201/00, C09D 7/12, C23C 26/00

(54) **COATING MATERIAL INCLUDING FIRED OBJECT OF SOFT POROUS ANCIENT MARINE HUMUS**

(30) Priority: 23.05.2016 JP 2016102263
(71) Applicant: Yoshikawa, Mitunaga, Ichikawa-shi, Chiba 272-0832 (JP)
(72) Inventor: Yoshikawa, Mitunaga, Ichikawa-shi, Chiba 272-0832 (JP)
(74) Representative: Gulde & Partner
(86) International application number: PCT/JP2017/018787
(87) International publication number: WO 2017/204102

(57) **Abstract**

An object of the present invention is to provide a functional material which achieves overall improvement in safety and usefulness of an oil. According to the present invention, the use of a calcined product of soft porous ancient marine humus makes it possible to improve a quality of various oils.

## Description

### Technical Field

The present invention relates to a coating material comprising a calcined product of soft porous ancient marine humus. The present invention also relates to a composition, an apparatus or a implement which have an effect of improving an oil quality, and which utilize a calcined product of soft porous ancient marine humus as an active ingredient therein.

### Background Art

Oils and fats of animals and plants are lipids mainly containing triacylglycerols in which three fatty acid molecules are bonded to one glycerol molecule, and physicochemical characteristics of the oils and fats vary depending on the lengths and three-dimensional structures of fatty acid moieties. Some of the fatty acids have one or more unsaturated bonds (double bonds). A carbon-carbon unsaturated bond having two hydrogens on the same side is referred to as cis, whereas a carbon-carbon unsaturated bond having two hydrogens on the opposite sides is referred to as trans. Fatty acids of the trans type (trans fatty acids) are more stable than fatty acids of the cis type, and remain in the body without decomposition. Hence, the trans fatty acids are considered to be a factor that increases the risk of cardiovascular diseases (especially, coronary heart diseases) and the like. Edible oils and fats for deep-frying have been manufactured by using various vegetable oils and animal oils as raw materials. Trans fatty acids are formed not only in a heat treatment with water vapor in a deodorization step, which is one of the steps of refining an oil or fat, but also during the production of hydrogenated oil (such as margarine or shortening) by adding hydrogen to unsaturated bond moieties of fatty acids constituting the oil or fat.

In addition, when a food is deep-fried in an edible oil or shortening, the Maillard reaction turns the color of deep-fried foods such as potato chips, french-fried potato, and rice crackers into brown, and harmful acrylamide having a double bond is formed. Acrylamide is a carcinogen, and is also known as an advanced glycation end product associated with aging.

In addition, a mineral oil or a chemically synthesized oil is used as a fuel oil or a lubricant oil for a vehicle or a marine vessel, and degradation of these oils causes decrease in fuel-efficiency.

Meanwhile, soft porous ancient marine humus is sea mud rich in natural minerals, and is used as, for example, a cosmetic additive (Tanakura Clay) (Patent Literature 1). A calcined product of soft porous ancient marine humus is used, for example, for activating water in bath by generation of infrared rays (Patent Literature 2), or forming mineral water (Patent Literature 3). However, neither blending of a calcined product of soft porous ancient marine humus into a coating material nor a treatment of an oil with a calcined product of soft porous ancient marine humus is described in any of the cited literatures.

### Citation List

### Patent Literatures

Patent Literature 1: Japanese Patent Application Publication No. 2007-269656
Patent Literature 2: Japanese Patent Application Publication No. Hei 9-236324
Patent Literature 3: Japanese Patent Application Publication No. 2008-68237

### Summary of Invention

### Problems to be solved by the invention

There has been a demand for a technique for improving the safety and usefulness of an oil, but no sufficient solution has been provided. In addition, soft porous ancient marine humus is useful as a functional material, but examples of application thereof are limited and the potential is not fully utilized. Accordingly, an object of the present invention is to provide a functional material which achieves overall improvement in safety and usefulness of an oil.

### Means for solution of the problems

To achieve the above-described object, the present inventor has conducted intensive study, and consequently has found that a calcined product, such as a calcined powder or a sintered body, of soft porous ancient marine humus has an effect of improving an oil quality. This finding has led to the completion of the present invention.

Specifically, the present invention provides the following composition for oil quality improvement, such as a coating material, comprising a calcined product of soft porous ancient marine humus, or the following apparatus or implement for oil quality improvement which comprises the calcined product.
[1] A coating material, comprising a calcined product of soft porous ancient marine humus.
[2] The coating material according to the above-described [1], wherein
   the amount of the calcined product contained is 0.005% by mass to 20.0% by mass relative to the solid content in the coating material.
[3] The coating material according to the above-described [1] or [2], which is for coating a metal.
[4] An apparatus or implement, which is coated with the coating material according to any one of the above-described [1] to [3].
[5] The apparatus or implement according to the above-described [4], which is for use in cooking.
[6] The apparatus or implement according to the above-described [5], which is a plate or a cartridge, or a pot, a frying pan, a cauldron, or a mold for food manufacturing.
[7] The apparatus or implement according to the above-described [4], which is to be in contact with fuel oil, lubricant oil, crude oil, or petroleum.
[8] The apparatus or implement according to the above-described [7], which is a fuel tank, a fuel supply pipe, an engine oil tank, an oil gauge, an oil pump, an oil line, an oil filter, a transmission case, a differential case, a rotation transmission part, or a tanker.

### Advantageous Effects of Invention

According to the present invention, the following oil quality improvement effects are achieved, so that the safety and usefulness of an oil can be improved.
(1) Trans fatty acids in an oil can be reduced in amount and even completely eliminated.
(2) Generation of acrylamide in an oil can be suppressed.
(3) Increase in viscosity of an oil can be suppressed, or the viscosity can be lowered.
(4) The residual ratio of a deep-frying oil can be improved.
(5) The increase in acid number of an oil can be suppressed, or the acid number can be lowered.
(6) The increase in peroxide number of an oil can be suppressed, or the peroxide number can be lowered.
(7) The fuel-efficiency of an internal combustion engine can be improved.

### Brief Description of Drawings

Fig. 1 shows a hypothesis of a unique structure of an oil formed by weak vibration due to far-infrared rays.
Fig. 2A illustrates a hypothesis of the conversion from the cis configuration to the trans configuration by addition of hydrogenation hydrogens at a carbon-carbon double bond moiety, and the reconversion to the cis configuration by elimination of the hydrogenation hydrogens.
Fig. 2B illustrates the hypothesis of the conversion from the cis configuration to the trans configuration by addition of hydrogenation hydrogens at a carbon-carbon double bond moiety and reconversion to the cis configuration by elimination of the hydrogenation hydrogens.
Fig. 2C illustrates the hypothesis of the conversion from the cis configuration to the trans configuration by addition of hydrogenation hydrogens at the carbon-carbon double bond moiety and reconversion to the cis configuration by elimination of the hydrogenation hydrogens.
Fig. 2D illustrates the hypothesis of the conversion from the cis configuration to the trans configuration by addition of hydrogenation hydrogens at the carbon-carbon double bond moiety and the reconversion to the cis configuration by elimination of the hydrogenation hydrogens.
Fig. 3A shows atomic orbitals in a carbon-carbon double bond moiety (θ=0°C). Fig. 3B shows atomic orbitals in a carbon-carbon double bond moiety (θ=180°C).
Fig. 3C shows atomic orbitals in a carbon-carbon double bond moiety (θ=90°C).
Fig. 4 shows the change in acid number of a deep-frying oil.
Fig. 5 shows photographs of a deep-frying oil before and after treatment.

### Description of Embodiments

A coating material of the present invention comprises a calcined product of soft porous ancient marine humus.

The "soft porous ancient marine humus" described in the present specification refers to sea mud formed by burial and deposition of various marine animals and plants (algae, plankton, coral, fish and shellfish, and the like) in the ancient ocean, followed by decomposition, metabolism, and resynthesis repeated by an action of microorganisms and the like for a long period. The sea mud may be uplifted by diastrophism, and, for example, may be one collected from the Tanagura fracture zone in Fukushima Prefecture, Japan, which is commercially available under the trade names of Tanakura Clay (registered trademark), MINEGURIN (registered trademark), MINEGURETTO (registered trademark), Mironekuton (registered trademark), and the like. Currently, the soft porous ancient marine humus collected from the Tanagura fracture zone in Fukushima Prefecture has been found to contain 64 elements, and the components include silicic acid, phosphoric acid, potassium, magnesium, silicic acid, iron, manganese, boron, molybdenum, and the like.

The calcined product of the soft porous ancient marine humus may be prepared by finely pulverizing sand-shaped soft porous ancient marine humus, followed by calcination at, for example, approximately 500 to approximately 1000°C, and preferably approximately 800°C. The temperature for the calcination of the finely pulverized soft porous ancient marine humus may be raised stepwise to prevent gases such as water vapor and sulfurous acid gas from being left inside the finely pulverized material. The particle diameters of raw material particles of the finely pulverized soft porous ancient marine humus may be, for example, 1 µm to 100 µm, preferably 2 µm to 50 µm, and further preferably 5 µm to 20 µm, as measured with a laser diffraction/scattering particle diameter distribution measuring instruments. The calcined product of the soft porous ancient marine humus may be a sintered body prepared by molding raw material particles of the above-described soft porous ancient marine humus with water added thereto, followed by calcination, or may be a calcined powder prepared by directly calcining raw material particles of the soft porous ancient marine humus, of which the calcined powder is preferable. Regarding the particle diameter of the calcined powder, the particle diameters of the raw material particles of the soft porous ancient marine humus are almost retained, and the particle diameter of the calcined powder may be, for example, 1 µm to 100 µm, and is preferably 2 µm to 50 µm, and further preferably 5 µm to 20 µm, as measured with a laser diffraction/scattering particle diameter distribution measuring instruments.

The coating material of the present invention may be used for, for example, coating metals such as iron and stainless steel, and may contain a suitable coating resin according to the purpose. The coating resin is not particularly limited, and may be, for example, a fluororesin, such as polytetrafluoroethylene (PTFE, tetrafluoride resin), tetrafluoroethylene·hexafluoropropylene copolymer (FEP), or tetrafluoroethylene·perfluoroalkyl vinyl ether copolymer (PFA), or a silicone resin. As The dispersion medium for the coating resin is not particularly limited, and it is possible to employ, for example, water; an alcohol such as a monohydric or polyhydric alcohol having 1 to 3 carbon atoms, ethylene glycol, propylene glycol, polyethylene glycol, or polypropylene glycol; a C₁₋₃alkyl ether of any of the above-described alcohols; a C₁₋₃alkyl ester of any of the above-described alcohols; or a mixture of any ones of them. The coating material of the present invention may be prepared, for example, by adding the calcined product of the soft porous ancient marine humus to a dispersion (coating agent) containing 40 to 60 parts by mass of a fluororesin, 40 to 50 parts by mass of water, 1 to 5 parts by mass of ethylene glycol, 0.5 to 3 parts by mass of a lower alcohol, and trace amounts of optional components (a surfactant, a pigment, and the like).

The coating material of the present invention may also be prepared by adding the calcined product of the soft porous ancient marine humus to a commercially available coating agent containing the above-described coating resin. As the commercially available coating agent, it is possible to use, for example, 852N-201, 856N-200, EM-500CL, 959-202, or the like manufactured by Du Pont-Mitsui Fluorochemicals Co., Ltd., or POLYFLON (registered trademark) PTFE EK-3700 series, TC-7100 series, or TC-7800 series, or NEOFLON (registered trademark) ND-2R, ND-4R, ND4GYHR, PFA AD-2CRER, or PFA AW-5000R manufactured by Daikin Industries, Ltd., or the like.

The amount of the calcined product of the soft porous ancient marine humus contained in the coating material of the present invention may be, for example, 0.005 parts by mass to 20.0 parts by mass, and is preferably 0.01 parts by mass to 3.0 parts by mass, and more preferably 0.05 to 2.0 parts by mass, relative to 100 parts by mass of the solid content consisting of the above-described coating resin and optional additives described later. When the amount of the solid content contained in the coating material is 50% by mass, the amount of the calcined product contained is calculated to be 0.0025% by mass to 10.0% by mass, 0.005% by mass to 1.5% by mass, or 0.025% by mass to 1.0% by mass relative to the coating material. The adjustment of the amount of the calcined product contained within such a range makes it possible to produce a coating material that exhibits a good oil quality improvement effect and is resistant to peeling-off.

The coating material of the present invention may contain optional additives which may be ordinarily blended in a coating agent, unless the oil quality improvement effect of the calcined product of the soft porous ancient marine humus is impaired. As the optional additives, it is possible to employ, for example, a binder resin such as polyethersulfone (PES) resin, polyamideimide (PAI) resin, polyimide (PI) resin, or polyphenylene sulfide (PPS) resin, a coloring agent such as a pigment, a coating film-reinforcing agent such as mica or ceramic particles, a chelating agent that improves the adhesion to a substrate, and the like.

As a coating method using the coating material of the present invention, any coating method which may be commonly used in this technical field can be employed without any particular limitation, and, for example, the coating may be conducted by air gun coating or airless-gun coating. The film thickness of a coating formed from the coating material of the present invention can be adjusted at one's discretion according to the characteristics of an article to be coated or the amount of application of the calcined product of the soft porous ancient marine humus, and may be, for example, 0.1 µm to 1000 µm, and is preferably 1 µm to 100 µm, and further preferably 10 µm to 50 µm.

Suppose a case where, for example, a metal is once coated with the coating material, and the coating resin component in the coating material peels off during a subsequent metal-processing step or subsequent use. Even in such a case, the calcined product of the soft porous ancient marine humus is held by fine concavities and convexities, holes, or the like on the metal surface subjected to the coating treatment, and can exhibit the above-described oil quality improvement effect.

"Oil" described in the present specification refers to a substance that is insoluble in water, is viscous, has a lower specific gravity than water, and is combustible, and may include animal or vegetable oils and fats, as well as mineral oils. The animal or vegetable oils and fats may be, for example, edible oils, and specifically may be vegetable oils such as soybean oil, rapeseed oil, olive oil, corn oil, and sesame oil, or animal oils such as fish oil, cod liver oil, and whale oil. The mineral oils may be, for example, crude oil or petroleum, and specifically may be fuel oils such as gasoline, light oil, and lamp oil, or lubricant oils such as engine oil and transmission oil.

In some aspect, the present invention relates to a composition for oil quality improvement comprising the above-described calcined product of the soft porous ancient marine humus. The above-described "composition for oil quality improvement" refers to a composition used to improve an oil quality. The above-described "oil quality" refers to a quality of an oil relating to, for example, safety, usefulness, or the like of the oil, and this may be degraded because of occurrence of a physical or chemical change, contamination with impurities, or the like during the processing or use of the oil. The "oil quality improvement" described in the present specification means not only recovery of a degraded oil quality to the original state, but also improvement in quality of the oil by further enhancing the safety, usefulness, or the like. In addition, the composition for oil quality improvement of the present invention may also be used as, for example, a coating material.

In some aspect, the present invention relates to an apparatus or implement coated with the above-described coating material or composition for oil quality improvement. Since the apparatus or implement contains the above-described calcined product of the soft porous ancient marine humus in a coating on the surface thereof, the apparatus or implement can exhibit the oil quality improvement effect based on the calcined product. The material of the apparatus or implement is not particularly limited, as long as the material can be coated with the coating material or composition for oil quality improvement, and the material of the apparatus or implement may be, for example, a metal such as iron or stainless steel. In addition, the type of the apparatus or implement is not particularly limited, as long as the oil quality improvement effect based on the calcined product can be exhibited, and the type of the apparatus or implement may be, for example, any plate, or may be an apparatus or implement used for cooking such as a pot, a frying pan, a cauldron, or a mold for food manufacturing, or may be an apparatus or implement to be in contact with fuel oil, lubricant oil, crude oil, or petroleum such as a fuel tank, a fuel supply pipe, an engine oil tank, an oil gauge, an oil pump, an oil line, an oil filter, a transmission case, a differential case, a rotation transmission part, or a tanker.

In some aspect, the present invention relates to an apparatus or implement for oil quality improvement comprising the above-described calcined product of the soft porous ancient marine humus. The apparatus or implement for oil quality improvement may have, for example, a coating containing the calcined product on its surface, may have the calcined product inside the apparatus or implement, or may contain the calcined product as a raw material. The apparatus or implement for oil quality improvement can exhibit the oil quality improvement effect based on the calcined product. It is conceivable that weak vibration due to far-infrared rays attributable to the above-described calcined product may contribute to the oil quality improvement effect. Hence, as long as the weak vibration is transmitted, the calcined product does not necessarily have to be arranged so as to come into contact with the oil to be treated, but is preferably arranged to be capable of coming into contact with the oil to be treated. The type of the apparatus or implement is not particularly limited, as long as the oil quality improvement effect based on the calcined product is exhibited, and, for example, the apparatus or implement may be any plate, or may be an apparatus or implement used for cooking such as a pot, a frying pan, a cauldron, or a mold for food manufacturing, or may be an apparatus or implement to be in contact with fuel oil, lubricant oil, crude oil, or petroleum such as a fuel tank, a fuel supply pipe, an engine oil tank, an oil gauge, an oil pump, an oil line, an oil filter, a transmission case, a differential case, a rotation transmission part, or a tanker. In addition, when the apparatus or implement has the calcined product thereinside, the apparatus or implement may be, for example, a cartridge in which the calcined product is accommodated in an inner cavity, or may be a tank comprising the calcined product in an oil accommodation portion. The cartridge may be used, for example, by being placed in the oil to be treated. The calcined product of the soft porous ancient marine humus accommodated in the cartridge, or the calcined product of the soft porous ancient marine humus provided in an oil accommodation portion of a tank is may be a calcined powder or a sintered body, and is preferably a sintered body. The particle diameter of the sintered body may be, for example, 0.1 mm to 100 mm, and is preferably 1 mm to 20 mm.

When the coating material or the composition, the apparatus, or the implement for oil quality improvement of the present invention is brought into contact with a food containing trans fatty acids, the trans fatty acids in the food are reduced in amount, so that a safe food can be produced. The temperature at the contact is not particularly limited, as long as the conversion of carbon-carbon double bonds from the trans configuration to the cis configuration occurs, and the temperature may be, for example, a low temperature of 1°C to 10°C, may be 50°C to 60°C at which oil molecules vibrate actively, or may be 150°C to 200°C, which are employed for deep-frying. The time taken by the conversion from the trans configuration to the cis configuration is longer at low temperature (for example, approximately 3 days at approximately 4°C), and shorter at high temperature (for example, approximately 30 minutes at approximately 180°C). The trans fatty acids are substances which are said to increase the risk of heart diseases, and examples of foods containing trans fatty acids include industrially produced foods such as margarine, fat spread, shortening, bread, cake, doughnut, and deep-fried foods, as well as naturally occurring foods such as beef, mutton/lamb (ruminants), cow's milk, and dairy products (butter, yogurt, etc.). The trans fatty acids in the former may be formed, for example, when an oil or fat is subjected to a hydrogenation treatment, whereas the trans fatty acids in the latter may be formed, for example, by an action of microorganisms in the stomach of a ruminant such as cattle. According to the present invention, the trans fatty acids in either case can be converted to the cis configuration. The trans fatty acid content can be determined by, for example, gas chromatography-mass spectrometry (GS-MS method) or the like.

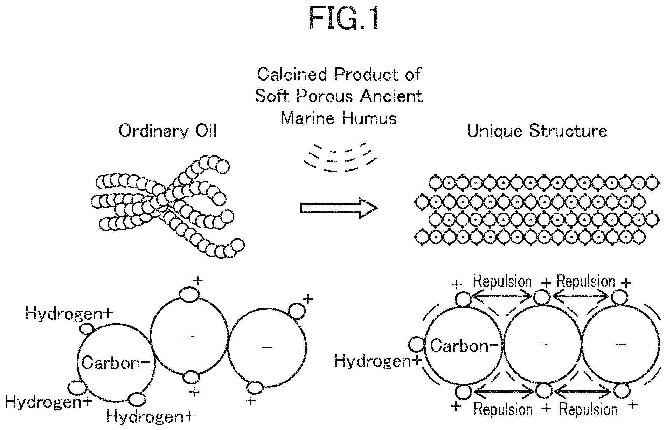

The oil quality improvement effect of the calcined product of the soft porous ancient marine humus does not have to be restricted to a specific theory; however, for example, far-infrared rays having wavelengths of 4 to 24 µm emitted from the calcined product are considered to contribute to this effect. The far-infrared rays are emitted from the calcined product even at low temperature or normal temperature; however, the far-infrared rays would be emitted more intensively at high temperature. Weak vibration due to the far-infrared rays causes resonation of carbons and hydrogens constituting an oil, and promotes the positive hydrogens to the upper limit of the orbitals with respect to the negative carbons. This causes positive hydrogens constituting an oil molecule to repulse with each other, so that the oil forms a unique structure resistant to decomposition (Fig. 1). During the formation of this unique structure, the double bond moiety is thought to be converted from the trans configuration to the cis configuration.

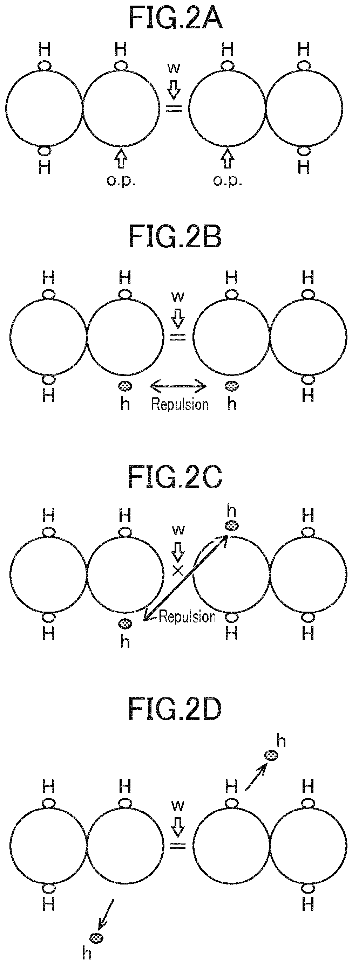

The conversion of a double bond from the trans configuration to the cis configuration due to the resonation phenomenon can be explained by, for example, the following hypothesis. It is known that a hydrogenation treatment conducted in a manufacturing step of an edible oil causes the formation of trans fatty acids. During the treatment, hydrogenation hydrogens h enter open positions o. p. of a double bond w taking the cis configuration (Fig. 2 A); hydrogenation hydrogens h adjacent to each other have the same polarity, and hence repulse with each other (Fig. 2B); and the double bond moiety is inverted (Fig. 2C). The thus formed trans configuration is more stable than the cis configuration, and hence does not return to the cis configuration, unless a certain energy is applied. However, it is conceivable that the hydrogenation hydrogens h, which are hydrogens added from the outside, are weakly bonded, and hence the hydrogenation hydrogens h would be detached immediately after application of the weak vibration attributable to the calcined product of the soft porous ancient marine humus. Accordingly, it is conceivable that the double bond placed in an excited state, namely, the trans configuration, would be inverted and return to the cis configuration, which is the initial ground state (Fig. 2D).

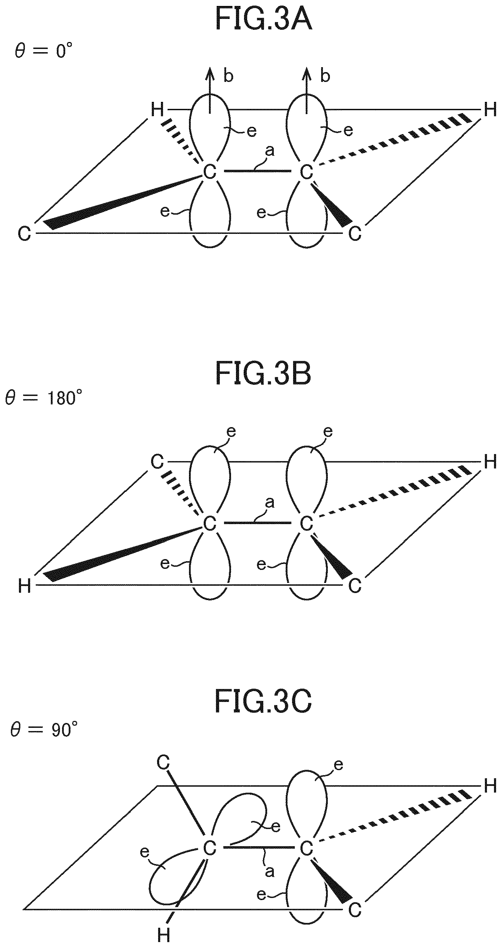

In general, a double bond formed between two carbon atoms consists of a σ-bond formed by atomic orbitals arranged along the axis a connecting the two nuclei, and a π-bond formed by atomic orbitals arranged along the axes b perpendicular to the axis a (Fig. 3 A). When the double bond is converted from the cis configuration (Fig. 3 A) to the trans configuration (Fig. 3B), the rotation angle θ of the axial direction of an atomic orbital forming the π-bond changes from θ=0° to θ=180°. Note that when the rotation angle θ = 90° (Fig. 3C), the electrons e on the axes b do not interact with each other at all, and hence are not stabilized by a π-bond. The repulsive force between the hydrogenation hydrogens h added by a hydrogenation treatment conducted in a manufacturing step of an edible oil rotates the axis of the bond by 180°, causing the conversion from the cis configuration to the trans configuration. It is assumed that when the vibration (resonant waves) attributable to the calcined product of the soft porous ancient marine humus is applied here, linear fatty acids having the trans configuration are especially arranged in parallel to the advancing direction of the resonant waves, and the resonant waves exert an influence on π-electrons in atomic orbitals perpendicular to the resonant waves, so that the axis of the bond is rotated back to the cis configuration, which is the most stable ground state (θ=0°).

When the coating material or the composition, the apparatus, or the implement for oil quality improvement of the present invention is used in a manufacturing line of a food in which acrylamide may be generated, the generation of acrylamide is suppressed, so that a safe food can be produced. Acrylamide is a harmful substance suspected to have carcinogenesis and neurotoxicity, and is thought to be formed by a chemical reaction (aminocarbonyl reaction) between asparagine and a reducing sugar in a raw material of a food during high-temperature cooking in a deep-frying oil or the like. Examples of foods in which acrylamide may be generated include deep-fried foods such as potato chips and french-fried potato. The acrylamide content can be determined by, for example, gas chromatography-mass spectrometry (GC/MS method), liquid chromatography-mass spectrometry (LC/MS method), liquid chromatography-tandem mass spectrometry (LC/MS/MS method), or the like.

When the coating material or the composition, the apparatus, or the implement for oil quality improvement of the present invention is used for, for example, cooking using a deep-frying oil, the increase in viscosity of the deep-frying oil can be suppressed or the viscosity can be lowered, so that the deep-frying oil becomes easy to drain off, and crispy deep-fried foods can be obtained. Moreover, the recovery of the deep-frying oil increases, and the residual ratio is improved. Hence, the amount and the number of times of replenishment of the oil can be reduced. Moreover, the suppression of the increase in viscosity of a deep-frying oil or the lowering of the viscosity of the deep-frying oil makes a fryer main body and the surroundings of the fryer such as a ventilating fan easier to clean, so that the kitchen environment is improved because of the reduction of the odor characteristic of oil.

When the coating material or the composition, the apparatus, or the implement for oil quality improvement of the present invention is used for, for example, cooking using a deep-frying oil, the increase in acid number or peroxide number of the deep-frying oil can be suppressed or the acid number or the peroxide number of the deep-frying oil can be lowered. It is known that oils and fats in a food degrades through deterioration paths such as hydrolysis, oxidation, decomposition, and polymerization due to external factors such as oxygen, temperature, light, metal, and moisture, eventually resulting in the formation of carbonyl compounds and the like. Depending on the degree of the degradation, not only the flavor is impaired, but also substances harmful to the human body may be formed. "Acid number" and "peroxide number" are used as physicochemical indices for evaluating degradation of oils and fats. The acid number is an index of the amount of free fatty acids in an oil or fat, and is expressed by the amount (mg) of potassium hydroxide required to neutralize free fatty acids contained in 1 g of the oil or fat. The peroxide number is an index of the amount of lipid peroxides in an oil or fat, and is expressed by the amount (mg) of iodine liberated from potassium iodide by peroxides in 1 g of the oil or fat. For example, a notification of the Ministry of Welfare entitled "BENTO OYOBI SOZAI NO EISEIKIHAN NI TSUITE (Hygiene Standards for Packed Meals (Bento) and Prepared Foods)" requires that when an apparent degradation of an oil or fat, such as an acid number exceeding 2.5, is observed during a deep-frying treatment, the oil or fat should be entirely exchanged with a fresh oil or fat. In general, deep-frying oils for commercial use are disposed of in 3 to 4 days; however, according to the present invention, the acid number can be maintained at or below approximately 2. Accordingly, even when a deep-frying oil is used for a long period, it is not necessary to dispose of the oil, but it is only necessary to replenish the oil. Hence, oil-soluble proteins originated from food ingredients and eluted during cooking are accumulated in the deep-frying oil, and provide umami taste, so that subsequent deep-fried foods can be cooked more savorily. At home, deep-frying oil is often disposed of after being used once or twice, in general. However, for example, when cooking is conducted in a deep-frying pot having the surface coated with the coating material of the present invention, the acid number of a deep-frying oil always remains at about 0.5, and hence the deep-frying oil can be used continuously only by replenishing the oil, without being disposed of.

When the coating material or the composition, the apparatus, or the implement for oil quality improvement of the present invention is used for, for example, a mineral oil, molecules of the mineral oil are linearly oriented, and hence the increase in viscosity can be suppressed, or the viscosity can be lowered. When molecules of a fuel oil are linearly oriented, the fuel oil becomes more combustible, and when molecules of a lubricant oil are linearly oriented, the decomposition resistance and the lubricity are improved. Therefore, according to the present invention, an effect of improving the fuel-efficiency and an effect of improving an engine performance are exhibited.

The oil quality improvement effect on a mineral oil by the calcined product of the soft porous ancient marine humus does not have to be restricted to any specific theory; however, the effect may be achieved by applying weak vibration to carbons constituting molecules of the mineral oil to prevent decomposition of the mineral oil or to separate impurities in the mineral oil. When the mineral oil is a fuel oil, the combustion efficiency of the oil is increased, so that the output of an internal combustion engine may increase, the fuel-efficiency may be improved, and harmful substances such as NOₓ and CO₂ may be reduced in amount. In addition, when the mineral oil is a lubricant oil such as an engine oil or a transmission oil, the decomposition resistance of the oil is improved, so that the service life of the oil is extended.

Hereinafter, the present invention is specifically described based on Examples; however, the scope of the present invention is not limited to these Examples. Examples

### [Example 1]

### 1. Preparation of Coating Material and Plates Coated Therewith

A calcined powder (particle diameter: 10 µm or less) was prepared by calcining Mironekuton (manufactured by Iwase Cosfa Co., Ltd.), which was soft porous ancient marine humus, in its original powdery state at approximately 800°C. A coating material (containing approximately 0.05% by mass of the calcined powder) was prepared by mixing 16 L of a PTFE-containing coating agent (852N-201 (manufactured by Du Pont-Mitsui Fluorochemicals Co., Ltd.) or EK-3700C21R (manufactured by Daikin Industries, Ltd.) containing approximately 50 parts by mass of a solid component (PTFE)) with 8 g of the calcined powder (approximately 0.1% by mass relative to the solid component).

The coating material was applied uniformly onto surfaces of stainless steel plates having a length of 5 cm and a width of 10 cm to a thickness of approximately 20 µm, followed by drying. The prepared coated plates were used as plates for oil quality improvement in the following experiments.

### 2. Regarding Trans Fatty Acids

The plate for oil quality improvement was immersed in 1 L of an edible oil (canola oil (manufactured by Showa Sangyo Co., Ltd.) or linoleic canola oil (manufactured by The Nisshin OilliO Group, Ltd.)), and allowed to stand at 180°C for 30 minutes. The trans fatty acid content was measured by a GCMS method before and after the treatment with the plate for oil quality improvement. The trans fatty acids examined included hexadecenoic acid, octadecenoic acid, elaidic acid, vaccenic acid, eicosenoic acid, and docosenoic acid. Table 1 below shows the results of the experiment conducted four times.

### [Table 1]

**Table 1: Trans Fatty Acid Content in Edible Oils**

| Oil Measured | Before Treatment | After Treatment |
|---|---|---|
| Canola Oil | 1.0 to 1.5g/100g | Less than 0.05 g/100 g (Not detected) |
| Linoleic Canola Oil | 1.1g/100g | Less than 0.05 g/100 g (Not detected) |

According to a report from Food Safety Commission of Japan, investigation of 22 edible cooking oils (in fiscal year 2006) showed that the trans fatty acid contents were 1.40 g per 100 g (1.4% by mass) on average and 2.78 g per 100 g (2.78% by mass) at the maximum. The National Food Research Institute also reported that ten and several commercially available plant oils and fats contained 0.1 to 1.2% by mass of trans fatty acids. The edible oils used in the above-described test also contained trans fatty acids at the same levels as those in these reports; however, the trans fatty acids were not detected after the treatment with the plate for oil quality improvement provided with the coating of the present invention.

### 3. Regarding Acrylamide

With the plate for oil quality improvement immersed in a deep-frying oil, potato chips were deep fried at 140°C. As the deep-frying oil, linoleic canola oil (manufactured by The Nisshin OilliO Group, Ltd.) was used. Acrylamide contained in the prepared potato chips was determined by the LC/MS/MS method (with a quantitation limit of 0.01 mg/kg), and the acrylamide content was 0.0786 mg/kg.

Regarding acrylamide in potato chips, the acrylamide contents are 0.467 mg/kg to 3.5440 mg/kg according to "KAKOSHOKUHIN CHUNO AKURIRUAMIDO NI KANSURU Q & A (Q & A regarding Acrylamide in Processed Foods)" by Ministry of Health, Labour and Welfare, and 0.17 mg/kg to 2.287 mg/kg according to a document from The Ministry of Agriculture, Forestry and Fisheries of Japan. In contrast, when potato chips were prepared with a deep-frying oil in which a plate for oil quality improvement provided with the coating of the present invention was immersed, the generation of acrylamide was suppressed remarkably. It is conceivable that the amount of acrylamide can be reduced to less than 0.01 ppm, which is the quantitation limit, by conditioning the management of the oil and the fryer and the manufacturing environment.

### 4. Preparation of Coating Material and Pot Coated Therewith

A calcined powder (particle diameter: 10 µm or less) was prepared by calcining Mironekuton (manufactured by Iwase Cosfa Co., Ltd.), which was soft porous ancient marine humus, in its original powdery state at approximately 800°C. A coating material (containing approximately 0.0625% by mass of the calcined powder) was prepared by mixing 16 L of a silicone resin-containing black coating agent ("Pyrosin (registered trademark) KX-3983" manufactured by Ohshima Kogyo Co., Ltd.) with 10 g of the calcined powder (approximately 0.125% by mass relative to the solid content in the coating agent).

The coating material was applied uniformly onto a frying pot subjected to an embossing treatment and having a diameter of 28 cm to a thickness of approximately 20 µm, followed by drying. The prepared coated pot was successfully used as a pot for oil quality improvement.

### [Example 2]

### 1. Preparation of Cartridge for Oil Quality Improvement Comprising Sintered Bodies

Spherical sintered bodies were prepared by molding Mironekuton (manufactured by Iwase Cosfa Co., Ltd.), which was soft porous ancient marine humus, into a spherical shape having a diameter of 15 mm, followed by calcination at approximately 800°C. Two of the sintered bodies were accommodated in a cartridge (25×25×60 mm, made of stainless steel, having a hole), which was used as a cartridge for oil quality improvement in the following experiments.

### 2. Regarding Trans Fatty Acids

The above-described cartridge for oil quality improvement was immersed in 1 L of an edible oil, and the trans fatty acid content was measured by the same method as in Example 1. After the treatment with the cartridge for oil quality improvement comprising the sintered bodies of the present invention, no trans fatty acids were detected as shown in Table 2 below.

### [Table 2]

**Table 2: Trans Fatty Acid Content in Edible Oil**

| Oil Measured | Before Treatment | After Treatment |
|---|---|---|
| Canola Oil | 1.0 to 1.5g/100g | Less than 0.05 g/100 g (Not detected) |
| Linoleic Canola Oil | 1.1g/100g | Less than 0.05 g/100 g (Not detected) |

### 3. Regarding Acrylamide

Potato chips were prepared by the same method as in Example 1, with the above-described cartridge for oil quality improvement immersed in a deep-frying oil. The acrylamide content in the potato chips was measured to be 0.0786 mg/kg.

### 4. Regarding Viscosity and Residual Ratio

Deep-fried foods were prepared, with the above-described cartridge for oil quality improvement immersed in a deep-frying oil. The experiment was conducted at a packed meal (Bento) shop in Tokyo manufacturing approximately 5000 packed meals per day. When the cartridge for oil quality improvement was used, the deep-frying oil underwent lowering of viscosity and became runny like water, in contrast to a case where the cartridge was not used. Consequently, the deep-frying oil was drained well, so that crispy deep-fried foods were obtained, and the deep-fried foods did not become oily, even when some time had passed after the deep-frying. In addition, the recovery of the deep-frying oil increased, and the amount of the oil replenished was approximately 30% fewer in this case than a case where the cartridge for oil quality improvement was not used. Hence, it can be said that the residual ratio of the deep-frying oil was improved by approximately 30%.

### 5. Regarding Acid Number

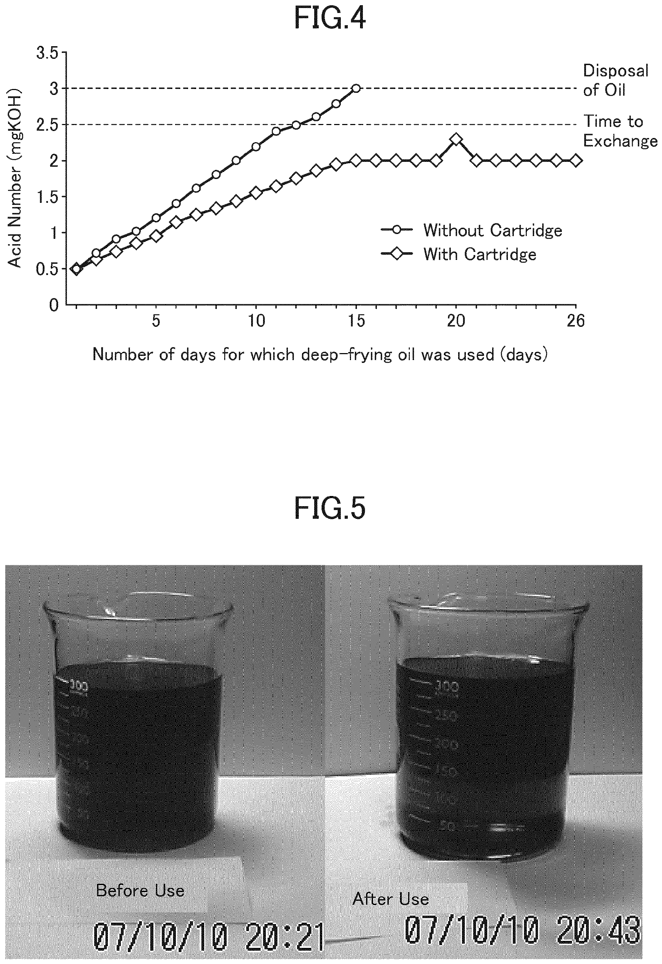

The above-described cartridge for oil quality improvement was immersed in a deep-frying oil, and the acid number of the deep-frying oil was measured. The experiment was conducted at a packed meal (Bento) shop in Tokyo manufacturing approximately 5000 packed meals per day. Fig. 4 shows the results.

The acid number is an index to determine whether or not the deep-frying oil is disposed of. An acid number exceeding 2.5 means that it is about time to exchange the deep-frying oil, and an oil with an acid number of 3 is disposed of. Without use of the cartridge for oil quality improvement, the acid number of the deep-frying oil increased in proportion to the number of days of use, and the oil had to be disposed of on day 15. In contrast, when the cartridge for oil quality improvement was used, the acid number of the deep-frying oil increased mildly, and did not exceeded 2 on almost all days.

### 6. Regarding Peroxide Number

The cartridge for oil quality improvement was placed in a deep-frying oil whose peroxide number had increased because of a long-term use, and the deep-frying oil was heated at 180°C for 30 minutes. Measurement by Japan Food Research Laboratories showed that the peroxide number was 10.1 meq/kg before the treatment with the cartridge for oil quality improvement, whereas the peroxide number was lowered down to 3.8 meq/kg after the treatment. In addition, Fig. 5 shows photographs of the deep-frying oil before and after the treatment. The deep-frying oil after the treatment was clearer than the deep-frying oil before the treatment, and some deposits were formed on the bottom of the beaker. It is conceivable that the acid number and the peroxide number of the deep-frying oil were lowered, because the treatment with the cartridge for oil quality improvement of the present invention caused aggregation and deposition of oxides or peroxides in the oil, which were then separated therefrom.

### [Example 3]

### 1. Preparation of Sintered Bodies for In-Tank Use

Spherical sintered bodies were prepared by molding Mironekuton (manufactured by Iwase Cosfa Co., Ltd.), which was soft porous ancient marine humus, into spherical shapes having diameters of 15 mm or 5 mm, followed by calcination at approximately 800°C.

### 2. Regarding Highest Power, Maximum Torque, and Fuel-Efficiency

One of the sintered bodies (diameter: 5 mm) was placed in an engine oil tank (E) containing an engine oil or a transmission case (T) containing a transmission oil. Table 3 below shows the measurement results of the highest power, the maximum torque, and the fuel-efficiency before and after the placement of the sintered bodies.

### [Table 3]

**Table 3: Highest Power, Maximum Torque, and Fuel-Efficiency**

| Placement of Sintered Body | Highest Power | Maximum Torque | Fuel-Efficiency |
|---|---|---|---|
| No | 90 ps/2750 rpm | 18.5 kgf·m/2550 rpm | approximately 7.6km/L |
| Yes (E) | 90 ps/2400 rpm | 20.5 kgf·m/2250 rpm | approximately 12.0 km/L |
| Yes (T) | 90 ps/2200 rpm | 22.0 kgf·m/2250 rpm | approximately 12.0 km/L |

When the sintered body of the soft porous ancient marine humus of the present invention is placed in the engine or the transmission case, the number of revolutions of the engine decreased at the exhibition of the highest power, the maximum torque increased even with the decreased number of revolutions, and the fuel-efficiency was improved.

Next, the differences in improvement ratio of fuel-efficiency were investigated among vehicle types and among fuels. One of the above-described sintered bodies (diameter: 15 mm) was placed in a fuel tank containing a fuel oil and, and one of the above-described sintered bodies (diameter: 5 mm) was placed in an engine oil tank containing an engine oil. Then, the fuel-efficiency of each vehicle was measured. Table 4 below shows the results.

### [Table 4]

**Table 4: Improvement Ratio of Fuel-Efficiency**

| | Vehicle Type | Fuel | Fuel-Efficiency | | Improvement Ratio (%) |
|---|---|---|---|---|---|
| | | | Before Addition | After Addition | |
| (1) | Sedan | Gasoline | 9.0 km/L | 11.67 km/L | 29.67 |
| (2) | Sedan | Gasoline | 9.0 km/L | 11.5 km/L | 27.78 |
| (3) | Short Wagon | Gasoline | 9.0 km/L | 10.82 km/L | 20.22 |
| (4) | Truck | Light Oil | 1.9 km/L | 2.67 km/L | 40.52 |
| (5) | Truck | Light Oil | 3.9 km/L | 5.182 km/L | 32.87 |
| (6) | Truck | Light Oil | 2.3 km/L | 2.62 km/L | 13.96 |
| (7) | Bus | Light Oil | 5.687 km/L | 6.048 km/L | 6.516 |
| (8) | Bus | Light Oil | 5.715 km/L | 6.182 km/L | 8.171 |

When the sintered bodies of the soft porous ancient marine humus of the present invention were placed in the fuel tank and the engine oil tank, the fuel-efficiency was improved for each vehicle type and for each fuel. Note that it is conceivable that the fuel-efficiency improvement ratios of the buses in Items 7 and 8 in Table 3 were as low as about 6 to 8%, because these buses were vehicles periodically inspected once a month and were kept in extremely good condition even before the addition. To put it differently, even a vehicle kept in extremely good condition can be further improved in fuel-efficiency, when a sintered body of the soft porous ancient marine humus of the present invention is used.

### 3. Regarding Viscosity

One of the above-described sintered bodies (diameter: 5 mm) was placed in a beaker containing 200 mL of heavy oil, which was a mineral oil. The mineral oil was allowed to stand for 15 minutes after the placement, and measured for the viscosity. Table 5 below shows the results.

### [Table 5]

**Table 5: Viscosity**

| | Placement of Sintered Body | Viscosity (Temperature) | Viscosity Drop Ratio |
|---|---|---|---|
| Heavy Oil (manufactured by Daiseki Co., Ltd.) | No | 63.3 mPa·s (26.8°C) | - |
| | Yes | 37.9 mPa·s (28.8°C) | 40.1% |

When a sintered body of the soft porous ancient marine humus of the present invention was placed in polyethylene tanks containing mineral oils, the viscosity of all the types of the mineral oils decreased. It is conceivable that this was because the resonant waves attributable to the calcined product of the soft porous ancient marine humus linearly oriented the molecules of each mineral oil, so that the entanglement of the molecules of the mineral oil was eliminated, and a sticky state turned into a runny state like water.

### 4. Other Effects

When the sintered bodies of the soft porous ancient marine humus of the present invention were placed in a fuel tank (a single sintered body having a diameter of 15 mm) and an engine oil tank (a single sintered body having a diameter of 5 mm), the following effects were observed.
- The engine sound was reduced.
- The shock at speed change was reduced or eliminated.

As described above, it has been found that the calcined product of the soft porous ancient marine humus has an effect of improving the quality of various oils. It has also been found that the same oil quality improvement effect can be achieved also when the calcined product is blended in a coating material or accommodated in an apparatus or implement such as a cartridge. Accordingly, it is possible to use the calcined product of the soft porous ancient marine humus in various applications as a functional material which achieves overall improvement in safety and usefulness of an oil.

## Claims

1. A coating material comprising a calcined product of soft porous ancient marine humus.

2. The coating material according to claim 1, wherein
the amount of the calcined product contained is 0.005% by mass to 20.0% by mass relative to the solid content in the coating material.

3. The coating material according to claim 1 or 2, which is for coating a metal.

4. An apparatus or implement, which is coated with the coating material according to any one of claims 1 to 3.

5. The apparatus or implement according to claim 4, which is for use in cooking.

6. The apparatus or implement according to claim 5, which is a plate or a cartridge, or a pot, a frying pan, a cauldron, or a mold for food manufacturing.

7. The apparatus or implement according to claim 4, which is to be in contact with fuel oil, lubricant oil, crude oil, or petroleum.

8. The apparatus or implement according to claim 7, which is a fuel tank, a fuel supply pipe, an engine oil tank, an oil gauge, an oil pump, an oil line, an oil filter, a transmission case, a differential case, a rotation transmission part, or a tanker.
